# EUROPEAN PATENT APPLICATION

(11) **EP 4 525 465 A1**
(43) Date of publication of application: **19.03.2025**
(21) Application number: 23197489.0
(22) Date of filing: 14.09.2023
(51) Int. Cl.: H04N 21/44, H04N 21/4402, H04N 21/472, H04N 21/4728, H04N 21/845

(54) **PLAYOUT DEVICE AND METHOD FOR PLAYING OUT ZOOMED BROADCAST CONTENT**

(71) Applicant: EVS Broadcast Equipment SA, 4102 Seraing (BE)
(72) Inventor: Barnich, Olivier, 4000 Liège (BE); Bastings, Michael, 4400 Flémalle (BE); Delvaux, Mathieu, 4520 Wanze (BE); Massoz, Quentin, 4400 Flémalle (BE); Michel, Tom, 4000 Liège (BE); Liesse, Valentine, 4600 Visé (BE)
(74) Representative: Rossmanith, Manfred

(57) **Abstract**

Playout device and method for playing out zoomed broadcast content starting from an input video stream captured by a wide angle of view camera. Based on a plurality of key points (KP1-KP5) in the input video stream a center of a zoomed virtual camera view and a corresponding zoom level is either manually selected or automatically determined. These data are used to calculate a trajectory (307) of the virtual camera movement for every image in the input video stream. For creating a zoomed video clip, the images of the input video are cropped outside of the virtual camera view (306).

## Description

### Field

The present disclosure relates to a playout device offering zoom capabilities and a method for playing out zoomed broadcast content, in particular video content.

### Background

A playout device is a central piece of technology used in the broadcasting industry for broadcasting content directly to one or several transmission station(s) and to recipients inside the studio, such as the production director or the production team. One person in the production team is tasked with operating the playout device and will be referred to as "user" in the following.

The playout device enables simultaneously monitoring program content and video streams from various sources such as cameras and storage devices where video clips are stored. Cameras provide video streams either encoded or unencoded while video clips most of the times are stored in encoded format on the storage devices. For the coverage of sports events, it is common to use wide angle of view cameras or even 360° cameras to capture an entire or at least a major part of a playing field, for example a soccer playing field. But sometimes only a smaller portion of the image captured by the wide angle of view camera is interesting. In this case, the user defines a virtual camera by zooming into the original video to create a new video clip. A video clip is a portion of a video stream limited by a beginning and an end.

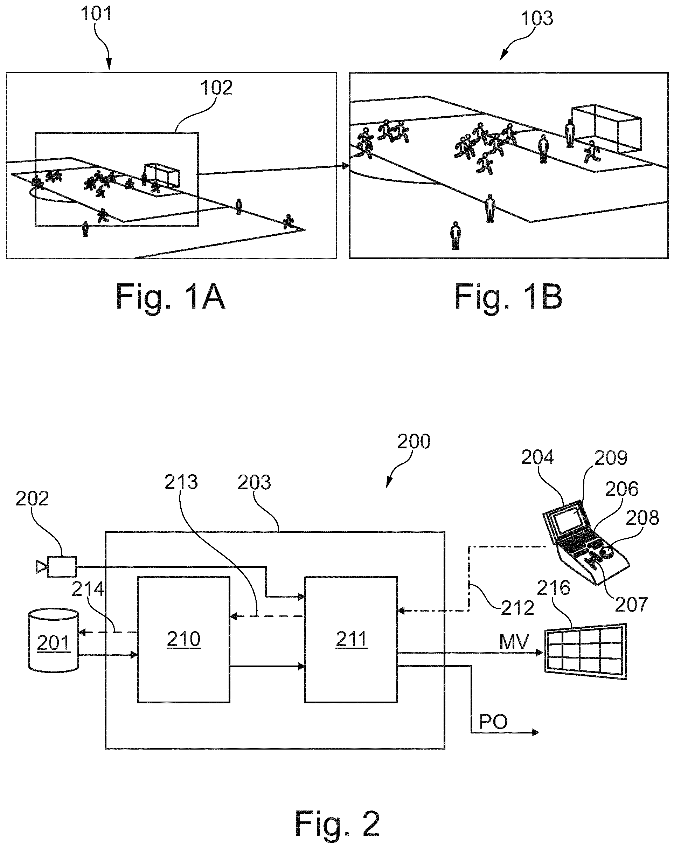

Figure 1A illustrates an original image 101 captured by the wide angle of view camera. The interesting portion of the image 101 is highlighted by a border 102. Figure 1B shows a zoomed image 103 of a virtual camera that corresponds to the interesting portion of the image in Figure 1A enclosed by the border 102. Since the zoomed image 103 contains fewer pixels, the image resolution of the zoomed image 103 is accordingly smaller than the image resolution of the original camera image 101.

Existing applications and/or devices for creating virtual cameras suffer at least from two limitations. Firstly, the process of creating a virtual camera view is mainly a manual process executed by the user who has to focus his attention on this task. This process involves positioning the focus and defining the zooming level of the virtual camera. Secondly, the virtual camera resolution is lower than the resolution of the original video. Some applications offer the possibility to upscale the resolution of the virtual camera image. However, conventionally the upscaling is performed by simple methods that degrade image quality of the virtual camera image.

An alternative approach for providing zoomed images of a playing field is disclosed in EP 3 550 823 A1, which describes a camera system comprising a static wide angle of view camera and a robotic camera. The static wide angle of view camera captures a reference image of a playing field. A processing apparatus including an artificial intelligence automatically determines a region of interest in the reference image of the playing field. The robotic camera is controlled such that it captures a zoomed image of the region of interest on the playing field with a high image resolution. Thus, the camera system solves the problems of a manual process and limited quality of the zoomed image. However, the additional robotic camera and its control is expensive. The production costs are further increased because the static wide angle of view camera is not appropriate to be used as a broadcast camera but only for the described specific usage.

In view of the limitations of existing solutions for creating a zoomed image of a region of interest by a virtual camera there remains a desire for a playout device to overcome or at least improve one or more of the problems mentioned at the outset.

### Summary

According to a first aspect the present disclosure suggests a playout device for a broadcast production system comprising a storage device for storing video streams. The playout device comprises a user interface for receiving instructions from a user and a processor executing software, which implements a plurality of functionalities of the playout device enabling a user
- to select a video stream stored on the storage device for being downloaded into a working memory of the processor and being displayed on a display device,
- to define a beginning and end of a video clip in the downloaded video stream, and
- to either manually select key points 1 to N and a zoom level associated with the key points 1 to N in a corresponding number of images between the beginning and the end of the video clip or
- to launch an automatic algorithm determining the key points 1 to N and the zoom level associated with each key point between the beginning and the end of the video clip.

The processor is configured to compute a trajectory composed of points defining a center and an associated zoom level of a zoomed virtual camera view for every image frame between the beginning and the end of the video clip. The computation of the trajectory and the associated zoom levels is based on the center and associated zoom level of the key points 1 to N and performed such that a smooth movement and zoom behavior of the virtual camera view between the key points 1 to N is achieved. The processor is configured to crop every image of the video clip outside the virtual camera view between the beginning and end of the video clip to create a zoomed virtual camera clip.

The suggested playout device allows creating a zoomed virtual camera view in the manual, semi-automatic or automatic mode from the video stream generated by the wide angle of view camera. Thus, no additional camera for a zoomed view is necessary. The zoomed virtual camera view is based on an input video stream captured by a wide angle of view camera that is stored on the storage device. In some use cases close-up cameras are used in addition to capture an interesting scene even closer. Regardless of the mode in which the virtual camera view is created, the user can edit the zoomed virtual camera view until he is satisfied with the result. The display device is utilized by the user for the creative process. The user interface may be integrated in the playout device or can be part of a separate device. For instance, in one embodiment the display device is part of a multi-view monitor wall, and the user interface is implemented on the control device connected with the playout device. The user can define the beginning and the end of the video clip simply by starting and terminating the process that leads to a zoomed virtual camera clip. For the sake of explanation, it is noted that the notion of a video stream has no defined beginning and end whereas the notion of a video clip relates to a portion of a video stream and is limited by the beginning and the end of the video clip.

In an advantageous embodiment of the playout device the processor comprises one or several neural network(s), which is or are configured to determine the key points and/or the zoom levels in the video clip.

In a preferred embodiment at least one of the neural networks is configured to determine regions of interest in the video clip based on saliency detection or object tracking. The regions of interest are smaller than images of the downloaded video stream. Neural networks have turned out to be very efficient in performing these tasks.

In a further advantageous development, the processor of the playout device is configured to determine the key points and the associated zoom levels utilizing the determined regions of interest.

Advantageously the processor is configured to upscale an image resolution of the cropped image to the original image resolution of the video clip or to a user selectable image resolution.

In a typical use case, the cropped images have different sizes and, therefore, the resolution of the cropped images varies from image to image. Consequently, it is advantageous to upscale the cropped images preferably to the image resolution of the downloaded video stream that has served as input to create to the zoomed virtual camera clip. Optionally, the upscaling is performed by a neural network.

In a useful embodiment the processor is configured to apply image improvement algorithms, which assure a high image quality of the zoomed virtual camera clip that meets the expectations of viewers of a sports event.

According to a second aspect, the present disclosure suggests a method for playout of a zoomed video stream by a playout device according to the first aspect of the present disclosure. The method comprises
- selecting a video stream stored on the storage device,
- downloading the selected into a working memory of the processor,
- defining a beginning and end of a video clip in the downloaded video stream, which delimits an input video stream,
- manually or automatically selecting key points 1 to N and a zoom level associated with the key points 1 to N in a corresponding number of images between the beginning and the end of the video clip,
- computing a trajectory composed of points defining a center and an associated zoom level of a zoomed virtual camera view for every image frame between the beginning and the end of the video clip. The computation of the trajectory and the associated zoom levels is based on the center and associated zoom level of the key points 1 to N and performed such that a smooth movement and zoom behavior of the virtual camera view between the key points 1 to N is achieved, and
- cropping every image of the video clip outside the virtual camera view between the beginning and end of the video clip to create a zoomed virtual camera clip.

The method is executable for example on the playout device according to the first aspect of the present disclosure. Hence, the method realizes the same advantages that have already been described in the context of the playout device.

In one embodiment the method further comprises upscaling the image resolution of the cropped images to the original resolution of the downloaded video stream or to a user selectable image resolution.

The cropped images are smaller than the original image of the input video stream. Therefore, the image resolution of the cropped images is smaller than the original image resolution and varies depending on the applied zoom level. Upscaling the cropped images enhances the quality of the cropped images.

In a further development the method further comprises applying image improvement algorithms on the upscaled images.

Such image improvement algorithms encompass for example deblurring and denoising of the cropped images.

In a useful embodiment the method further comprises displaying the downloaded video stream on a display device. Displaying the downloaded video stream on the display device helps the user to edit the video stream and facilitates the creative process of generating azoomed virtual camera clip. The display device is either part of the playout device or integrated in a separate device.

In a preferred embodiment the method further comprises automatically determining regions of interest in the video clip. The regions of interest are smaller than images of the downloaded video stream.

Automatically determining regions of interest in the video clip for the playout device relieves the user from a significant portion of manual work. Therefore, the user can focus his attention on other tasks of the broadcast production.

In one embodiment the method further comprises performing saliency detection or object tracking for determining the regions of interest in the video clip.

Saliency detection and object tracking have turned out to be efficient to detect regions of interest in the video clip.

In a preferred embodiment the method further comprises utilizing the detected regions of interest to determine the key points and the associated zoom levels.

According to a third aspect the present disclosure relates to a broadcast system comprising a playout device according to the first aspect of the present disclosure.

Further advantages will become apparent when reading the detailed description of an embodiment of the present disclosure accompanied by the drawing.

### Brief description of the drawings

Exemplary embodiments of the present disclosure are illustrated in the drawings and are explained in more detail in the following description. In the figures, the same or similar elements are referenced with the same or similar reference signs. Object shows:
- Fig. 1A: an original image of a wide-angle camera view of a playing filed,
- Fig. 1B: a zoomed portion of the original image of Fig. 1A,
- Fig. 2: a simplified architecture for a conventional production system,
- Fig. 3: a user interface of a replay device,
- Fig. 4: a schematic block diagram of a broadcast system;
- Fig. 5A: a saliency heat map;
- Fig. 5B: a saliency diagram of the saliency heat map of Figure 5A;
- Fig. 6: an image of a playing situation with a selected object; and
- Fig. 7: a schematic flow diagram.

### Detailed description

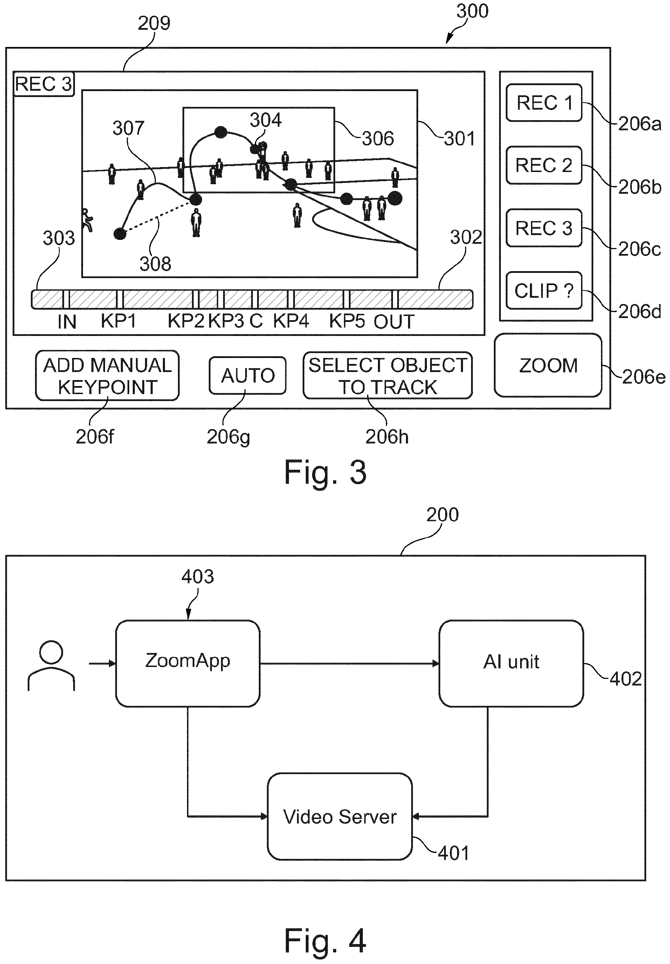

Figure 2 displays a simplified architecture for a conventional production system 200 for broadcast content. Broadcast content (briefly: content) refers to video and/or audio content which are encoded or unencoded signal streams (briefly: signals). The production system 200 comprises signal sources such as a storage device 201 and a camera 202 providing signal streams to a playout device 203, which is communicatively connected with the signal sources 201, 202. It is noted that in some for embodiments, the storage device 201 and the camera 202 are connected to the playout device 203 via a wide area network, such as is the case in distributed video production systems where various components of the broadcast system are not located in the same location. It is further noted that even though only a single exemplary storage device 201 and camera 202 are illustrated in Figure 1, in other embodiments a plurality of storage devices 201 and cameras 202 may be present. The playout device 203 is controlled by means of a control device 204, which is equipped with control elements such as buttons 206, a T-bar 207 and a jog dial 208. The control elements 206-208 enable an operator to select a video clip stored in the storage device 201 and to define how it is to be replayed. The video clip is either displayed on a screen 209 or on a multi-view monitor wall 216. For instance by means of the jog dial 208, the operator can browse through the selected video clip and define entry and exit points for replay (IN and OUT, respectively in Figure 3). With the T-bar 207 the operator can adjust the replay speed of the video clip. The entirety of the information entered by the user into the control device 204 is referred to as replay information. For example, the selected video clip can be replayed in slow-motion allowing viewers to watch an interesting scene in greater detail in the time domain. At the same time the user can select a region of interest in the selected video clip that is replayed as a zoomed image 103 allowing viewers to watch an enlarged/zoomed image of the interesting scene. This is particularly relevant for sports events when critical scenes happen in only a few seconds and/or within a small area in the original image 101 of the wide angle of view camera. This makes it very difficult for viewers to really appreciate the interesting scene in the original camera image. In this regard the playout device 203 is capable of enhancing the viewer experience significantly by providing zoomed images of the region of interest and/or by replaying the scenes in the region of interest in slow-motion.

To implement this functionality, the playout device 203 accommodates two functional blocks, namely a fetcher 210 and a processor 211. The processor 211 receives control commands symbolized by arrow 212. The control commands convey the mentioned replay information from the control device 204. The processor 211 submits a corresponding command 213 to the fetcher 210 which provides another command 214 to the storage device 201 to request the desired video stream from the storage device 201. The storage device 201 transfers the requested video stream as image stream to the fetcher 210, which transfers it to the processor 211. Typically, the stored video stream is encoded. Therefore, the processor 211 decodes the video stream and generates a corresponding program output stream PO and a multi-view stream MV provided to the multi-view monitor wall 216. The multi-view stream MV also contains video streams provided by cameras 202 supplied directly to the processor 211. The multi-view monitor wall 216 may also be used to display a video stream edited by the user.

Figure 3 schematically shows a user interface 300 of the control device 204. In some embodiments the user interface 300 is implemented as a combination of the display 209 with physical control elements. In other embodiments the user interface 300 is implemented as a combination of a touch screen and physical control elements or completely as a touch screen.

The user interface 300 enables the user to input control commands controlling the playout device 203. The control buttons 206a-c permit the user to select one of the plurality of stored video streams. In the example shown in Figure 3 the video clip labeled "REC 3" is selected and displayed in a first window 301 of display device 209. A timeline 303 of the displayed video clip is represented in a second window 302 below the first window 301 or on the bottom of window 301. By means of jog dial 208 (not shown in Figure 3) the user can browse through the selected video stream and define the beginning and the end of a new video clip that contains zoomed images of the stored video clip. The beginning and the end (entry and exit points) are labeled as IN and OUT, respectively, on the timeline 303. In a first embodiment the user manually determines key points KP1-KP5 on the timeline 303 by pressing a button 206f. Five key points are only an example. In other use cases the user determines fewer or more than five key points.

A cursor C indicates on the timeline 303 the currently displayed image. With a pointing device (not shown in Figure 3) the user chooses a center 304 and a zoom level of a cropped image indicated by a border 306. The user controls the zoom level by means of an appropriate input device such as a wheel of a computer mouse to zoom the virtual camera in or out and confirms the key point by pressing the button 206f. After two key points have been confirmed, the processor 211 of the playout device 203 calculates a trajectory 307 of a virtual camera utilizing the confirmed key points every time when one additional key point KP1-KP5 is confirmed. The trajectory 307 represents the location of the virtual camera focus corresponding to the center of the zoomed image in all frames of the clip between the beginning IN and the end OUT of the video clip. Each point on the trajectory is a triplet (x,y;t) comprising the coordinates x, y of the center of the zoomed image in one image frame and the point in time t when this image frame is displayed. Therefore, the trajectory 307 in Figure 3 indicates how the center of the zoomed image moves on the screen 209 which displays the image frame corresponding to the point in time where the cursor C is positioned and the border 306 of the zoomed image. Thus, when the cursor C is moved along the timeline 303 different image frames and different borders 306 are displayed on the screen 209 while the trajectory 307 remains stable unless at least one of the key points is moved.

The calculation of trajectory 307 may be based on a spline interpolation to achieve a smooth and natural movement of the virtual camera. However, other interpolation methods may be used as well. A dashed line 308 indicates a naive linear interpolation between key points KP1 and KP2. Such simple interpolation is not preferred because it results in an unnatural movement of the virtual camera.

The user can review the video clip of the virtual camera displayed on the display 209 or on the multi-view monitor wall 216. When the user is satisfied with the preview, he confirms it by pressing a button 206e and the playout device 203 creates a zoomed clip and stores it to a server 401 (Figure 4). By activating a button 206d the user can upload a previously stored video clip.

Alternatively, to automatically determining the key points the user can activate an AUTO button 206g to trigger an automatic processing of the selected video clip by a neural network implementing an artificial intelligence unit (short: AI unit) 402 (Figure 4). The AI unit 402 is integrated in the processor 211, for instance. The AI unit 402 automatically identifies regions of interest in the selected video clip and determines a center of the cropped image and its zoom level for each frame between the beginning and end of the video clip. In this way, the AI unit 402 computes a trajectory 307 of the virtual camera. The trajectory 307 connects the center of the zoomed image in each frame of the original video clip. The automatic identification of regions of interest and the automatic computation of the trajectory will be explained further in greater detail below.

For the sake of simplicity, it is assumed that the trajectory 307 computed by the AI unit 402 is the same as the manually selected trajectory. It is further assumed without limitation of the generality that key points KP1-KP5 on the trajectory 307 suggested by the AI unit 402 are the same as the manually selected key points KP1-KP5. Depending on the selected video clip, the AI unit 402 may determine fewer or more than five key points. The user can preview and edit the automatic suggestion generated by the AI unit 402 by adding and modifying one or several key points similarly to the manual mode described above. Once the user is satisfied with the preview, he confirms it by pressing the button 206e The playout device 203 calculates for each image of the original video clip a cropped image with the previously defined center of the image and zoom level. In this way the playout device creates a zoomed clip of the virtual camera and stores it to the server 401. For the sake of completeness, it is noted that the server 401 also stores streams directly from cameras 202 to make them available for the user at a later point in time.

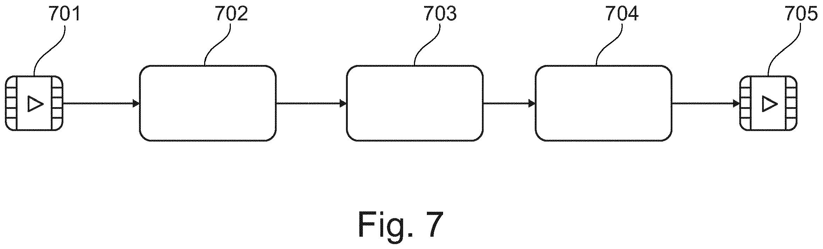

Figure 4 shows a high-level block diagram highlighting functional blocks of the broadcast system 200. Figure 4 is limited to those functional blocks, which are involved in the creation of a virtual camera view. The server 401 stores a plurality of video clips, which can be offered to a user for selection. The server 401 provides the video clip selected by the user that is then processed by the AI unit 402. Once the AI unit 403 has terminated the processing and the user is satisfied with the result, the zoomed clip representing the virtual camera view is restored on the server 401 as a new video clip. The server 401 makes the new video available by offering it to other devices involved in the creation of a broadcast program. A zoom application 403 running on the control device 204 is associated with the user interface 300 (Figure 3) enabling the user to make his inputs. Control commands based on user inputs are transmitted to the AI unit 402. The AI unit 402 performs automatic detection of regions of interest in the frames of the selected video clip. After the user has confirmed the preview of a virtual camera clip, the processor 211 creates the zoomed clip. The creation of assumed clip will be explained in further detail in connection with Figure 7.

### Detection of regions of interest

For determining the regions of interest and hence the trajectory of the virtual camera, the AI unit 402 analyzes the original camera images of the selected video clip according to two different approaches.

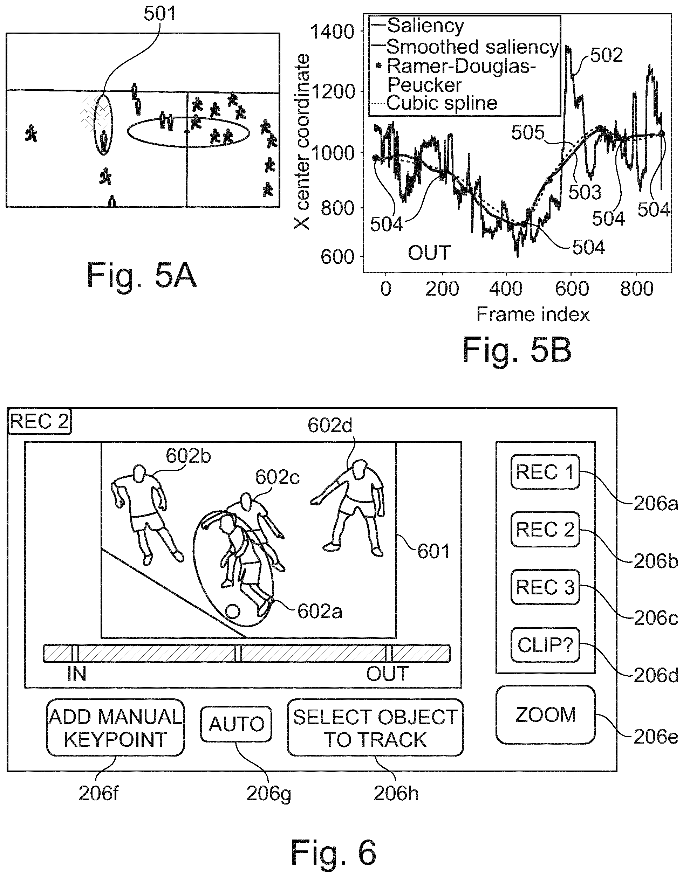

According to a first approach, saliency techniques are applied, which are known in the art, for example in https://arxiv.org/pdf/2012.06170.pdf. Figure 5A illustrates an exemplary saliency detection in an image of a soccer game. The salient region is illustrated with an ellipse 501. Saliency detection means that those regions in an image are detected where eyes of viewers focus first. The result of the salience detection for the entire video clip is shown in a diagram in Figure 5B as a curve 502 indicating the x-position of the salient region for every frame. Curve 502 is illustrated as thin solid line. A corresponding curve for the y-coordinate exists as well but is not shown in the figures. The abscissa of the diagram in Figure 5B represents the frame index of the video clip and the ordinate the x-coordinate of the center of the salient region. In a next step the curve 502 is filtered or smoothed by advanced filtering techniques to achieve a smoothed curve 503 shown as bold solid line. In a following step a Ramer-Douglas-Peucker algorithm is applied to the smoothed curve 503 and results in individual points 504 corresponding to key points. In a final step a spline interpolation is executed on these key points to obtain an interpolated curve 505 shown as dashed line. This process is executed for both the x- and y- coordinate. As a result, an interpolated curve is obtained that corresponds to the trajectory 307, which determines the movement of the virtual camera. This approach has the advantage that the user can edit the key points in the same way regardless of whether the key points were selected manually by the user or automatically determined by the AI unit 402. In this first approach the key points are determined fully automatically.

According to a second approach, the playout device generates the trajectory of the virtual camera based on object tracking. The user selects an object in an image of the original video clip. Figure 6 illustrates an image 601 of a playing situation in a soccer game. The image 601 shows four players 602a-d. By means of a pointing device (not shown in Figure 6) the user selects player 602a as an object to be tracked. The object tracking through all images between the defined beginning IN and end OUT of the stored video clip is achieved by image segmentation and tracking. The image segmentation is used to select an object in the image and the tracking follows the selected object through the entire video clip from frame to frame and generates in this way a trajectory of the virtual camera. The second approach where the key points are determined by object tracking is only semi-automatic because initially a user input to select the object to be tracked is required. Once the object is manually selected, it is automatically tracked.

As a segmentation method for example the commercial product "SegmentAnything" is applicable. As tracking method for example, the commercial products "TrackAnything" or "deAOTtracker" can be used. However, it is noted that to the present invention is not limited to a specific method for saliency detection, segmentation, and tracking.

Figure 7 shows a simplified schematic flow diagram of a method for creating a zoomed clip using the original video clip as input clip, wherein the zoomed video clip has the same image resolution than the input video clip or any other image resolution chosen by the user. In step 701 the input clip is loaded, and a virtual camera view is created. The input clip may have different image resolutions for example 8K, 4K, 1080p, 720p etc. In step 702 the images of the input clip are cropped to create the virtual camera clip as it has been explained in connection with Figure 3. The cropped images have different resolutions depending on the size of the cropped area. The image resolution of the cropped images is smaller than the image resolution of the input clip. For this reason, the cropped images are rescaled in step 703 by utilizing super-resolution imaging techniques to obtain the original image resolution of the input clip or any other resolution chosen by the user. Super resolution imaging techniques per se are known in the art. In addition to that, image quality enhancements are applied in step 704 on the cropped and upscaled images to restore image quality that is potentially lost during the processing. These image enhancement processes include state-of-the-art technologies such as deblurring and denoising. After these processing steps the zoomed clip is stored in step 705 on the server 401 and available for other devices in the broadcast production system.

Individual components or functionalities of the present invention are described in the embodiment examples as software or hardware solutions. However, this does not mean that a functionality described as a software solution cannot also be implemented in hard-ware and vice versa. Similarly, mixed solutions are also conceivable for a person skilled in the art, in which components and functionalities are simultaneously partially realized in software and hardware.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

**List of reference signs**

| | | | |
|---|---|---|---|
| 101 | original image | 401 | Server |
| 102 | Frame | 402 | AI unit |
| 103 | Cropped image | 403 | Zoom application |
| 200 | Production system | 501 | Salient region |
| 201 | Storage device | 502 | Curve |
| 202 | Camera | 503 | Smoothed curve |
| 203 | Playout device | 504 | Key points |
| 204 | Control device | 505 | Interpolated curve |
| 206 | Control buttons | | |
| 207 | T-bar | | |
| 208 | Jog dial | | |
| 209 | Display | | |
| 210 | Fetcher | 601 | Image |
| 211 | Processor | 602 | Player |
| 212 | Control commands | | |
| 213 | Command | | |
| 214 | Command | | |
| 216 | Multi-view monitor wall | | |
| 300 | User interface | | |
| 301 | first window | | |
| 302 | second window | | |
| 303 | Timeline | | |
| 304 | Center | | |
| 306 | Frame | | |
| 307 | Trajectory | | |
| 308 | Simple trajectory | | |
| C | Cursor | | |
| KP1-KP5 | Key points | | |

## Claims

1. Playout device for a broadcast production system (200) comprising a storage device (201) for storing video streams, wherein the playout device (203) comprises a user interface (300) for receiving instructions from a user, and a processor (211) executing software, which implements a plurality of functionalities of the playout device enabling a user
- to select a video stream stored on the storage device (201) for being downloaded into a working memory of the processor (211) and being displayed on a display device (209,216),
- to define a beginning (IN) and end (OUT) of a video clip in the downloaded video stream, and
- to either manually select key points 1 to N (KP1-KP5) and a zoom level associated with the key points 1 to N in a corresponding number of images between the beginning and the end of the video clip or
- to launch an automatic algorithm determining the key points 1 to N (KP1-KP5) and the zoom level associated with each key point between the beginning and the end of the video clip,
- wherein the processor (211) is configured to compute a trajectory (307) composed of points defining a center (304) and an associated zoom level of a zoomed virtual camera view for every image frame between the beginning (IN) and (OUT) the end of the video clip,
- wherein the computation of the trajectory (307) and the associated zoom levels is based on the center and associated zoom level of the key points 1 to N and performed such that a smooth movement of the virtual camera view between the key points 1 to N is achieved, and
- wherein the processor is configured to crop every image of the video clip outside the virtual camera view between the beginning and end of the video clip to create a zoomed virtual camera clip.

2. Playout device according to claim 1, wherein the processor (211) comprises one or several neural network(s), which is or are configured to determine the key points (KP1-KP5) and/or the zoom levels in the video clip.

3. Playout device according to claim 2, wherein at least one of the neural networks is configured to determine regions of interest (501,602a) in the video clip based on saliency detection or object tracking, and wherein the regions of interest are smaller than images of the video clip.

4. Playout device according to claim 3, wherein the processor is configured to determine the key points (KP1-KP5) and the associated zoom levels utilizing the determined regions of interest (501,602a).

5. Playout device according to one of the preceding claims, wherein the processor is configured to upscale an image resolution of the cropped image to the original image resolution of the downloaded video stream or to a user selectable image resolution.

6. Playout device according to claim 1, wherein the processor is configured to apply image improvement algorithms.

7. Method for playout of a zoomed video stream by a playout device according to one of the preceding claims, comprising
- selecting a video stream stored on the storage device,
- downloading the selected into a working memory of the processor,
- defining a beginning and end in a video clip in the downloaded video stream, which delimits an input video stream,
- manually or automatically selecting key points 1 to N and a zoom level associated with the key points 1 to N in a corresponding number of images between the beginning and the end of the video clip,
- computing a trajectory composed of points defining a center and an associated zoom level of a zoomed virtual camera view for every image frame between the beginning and the end of the video clip, wherein the computation of the trajectory and the associated zoom levels is based on the center and associated zoom level of the key points 1 to N and performed such that a smooth movement of the virtual camera view between the key points 1 to N is achieved, and
- cropping every image of the video clip outside the virtual camera view between the beginning and end of the video clip to create a zoomed virtual camera clip.

8. Method according to claim 7, wherein the method further comprises upscaling the resolution of the cropped images to the original image resolution of the downloaded video stream or to a user selectable image resolution.

9. Method according to claim 8, wherein the method further comprises applying image improvement algorithms on the upscaled images.

10. Method according to claims 7 to 9, wherein the method further comprises displaying the downloaded video stream on a display device.

11. Method according to claims 7 to 10, wherein the method further comprises automatically determining regions of interest in the video clip, wherein the regions of interest are smaller than images of the downloaded video stream.

12. Method according to claim 11, wherein the method further comprises performing saliency detection or object tracking for detecting the regions of interest in the video clip.

13. Method according to claim 11 or 12, wherein the method further comprises utilizing the detected regions of interest to determine the key points and the associated zoom levels.

14. Broadcast system comprising a playout device (203) according to claims 1 to 6.
